# EUROPÄISCHE PATENTSCHRIFT

(11) **EP 1 171 263 B1**
(45) Veröffentlichungstag und Bekanntmachung des Hinweises auf die Patenterteilung: **11.09.2002**
(21) Anmeldenummer: 00929362.2
(22) Anmeldetag: 14.04.2000
(51) Int. Cl.: B24B 33/10, B24B 41/06

(54) **WERKSTÜCKAUFNAHME**
WORK PIECE RECEIVER
DISPOSITIF DE RECEPTION D'UNE PIECE A USINER

(30) Priorität: 17.04.1999 DE 29906923 U
(43) Veröffentlichungstag der Anmeldung: 16.01.2002
(73) Patentinhaber: KADIA Produktion GmbH + Co., 72622 Nürtingen (DE)
(72) Erfinder: HENZLER, Bernhard, D-72654 Neckartenzlingen (DE)
(74) Vertreter: Dreiss, Fuhlendorf, Steimle & Becker
(86) Internationale Anmeldenummer: EP0003419
(87) Internationale Veröffentlichungsnummer: WO00062976

(56) Entgegenhaltungen:
- WO-A-96/11773

## Beschreibung

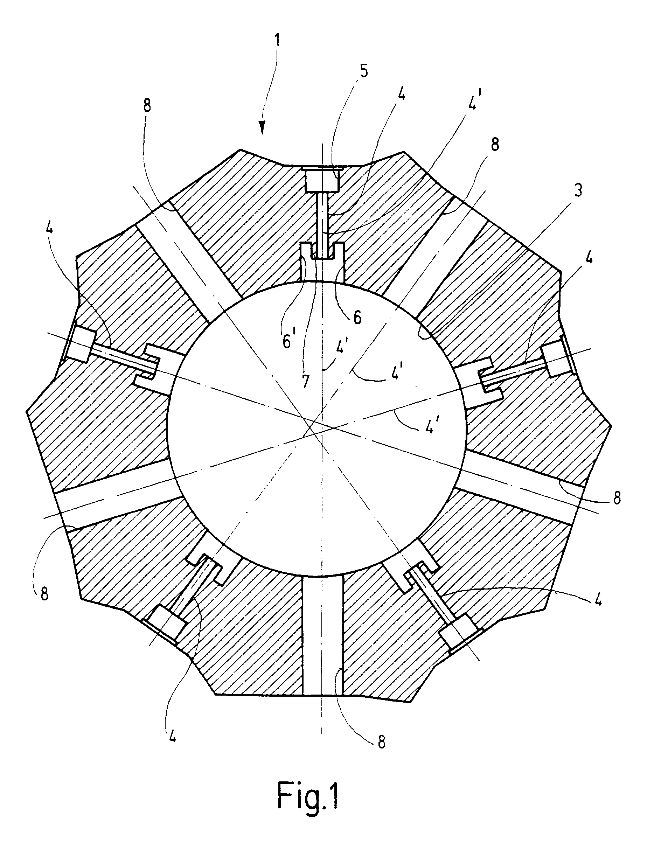

Die erfindung betrifft die Verwendung eines Steckdorns zum Aufspannen eines Werkstücks, wie es in Fig. 1 dargestellt ist.

Das Werkstück 1 nach Fig. 1 ist z. B. ein Pumpengehäuse, das von einer zentralen Bohrung 3 mit einer senkrecht zur Zeichenebene verlaufenden Achse durchsetzt ist. Die Bearbeitungsaufgabe, für die eine Werkstückaufnahme zu schaffen ist, besteht in der Bearbeitung der Bohrungen 4, im Ausführungsbeispiel nach Fig. 1 fünf an der Zahl, in denen z. B. in dem - hier nicht weiter interessierenden Zusammenhang - Pumpenkolben geführt sind. Die Bohrungen 4 müssen genau bearbeitet, insbesondere gehont werden. Die Besonderheit der Lage dieser Bohrungen 4 im Werkstück 1, aus der auch die Schwierigkeit einer geeigneten Aufnahme des Werkstückes 1 resultiert, besteht darin, dass die Achsen 4' der Bohrungen 4 sich nicht in einem Punkte schneiden. Wenn das der Fall wäre und dieser Punkt auf der Achse der Bohrung 3 liegen würde, wäre die Aufspannung auf einen Dorn, der in die Bohrung 3 einzuführen wäre, relativ einfach. Das ist aber nicht der Fall. Für jeden Bearbeitungsvorgang jeder Bohrung 4 muß eine erneute Positionierung und Justierung des Werkstückes gegenüber einer Spindel erfolgen, in der das Honwerkzeug aufgenommen ist. Das Honwerkzeug wird von außen (in Fig. 1) in die Bohrungen 4 eingeführt.

An die Bohrungen 4 schließen sich nach außen hin Absätze 5 an. Nach innen, d. h. zur Bohrung 3 hin, schließen sich mit größerem Radius Bereiche 6 an, deren wiederum äußere Bereiche 6' wie eine Ringnut um die Bereiche 7 herum verlaufen, die jeweils das innere Ende der Bohrungen 4 umgeben. Die gegenüberliegenden Herstellungsbohrungen 8 sind erforderlich, um die Bereiche 6 und 6' vom Inneren der Bohrung 3 her anbringen zu können. Diese Ausbildung des inneren Endes der Bohrung 4 ist durch die spätere Funktion des Werkstückes 1 bedingt.

Man hat seither für jedes Werkstück solcner Art, das durch den Durchmesser der Bohrung 3, die Lage und Zahl der Bohrungen 4, sowie die die Dicke des Gehäuses 3 (senkrecht zur Ebene von Fig. 1) gekennzeichnet war, eine separate Werkzeugaufnahme anfertigen müssen, die mit besonderen Verstelleinrichtungen so verstellbar und einstellbar sein müsste, dass sich jeweils die Bohrungen 4 genau unter der Honspindel befinden. Das war wegen der -bezogen auf die Achse der Bohrung 3 - jeweils unterschiedlichen Lage der Achsen der Bohrungen 4 von Einzelfall zu Einzelfall sehr kompliziert.

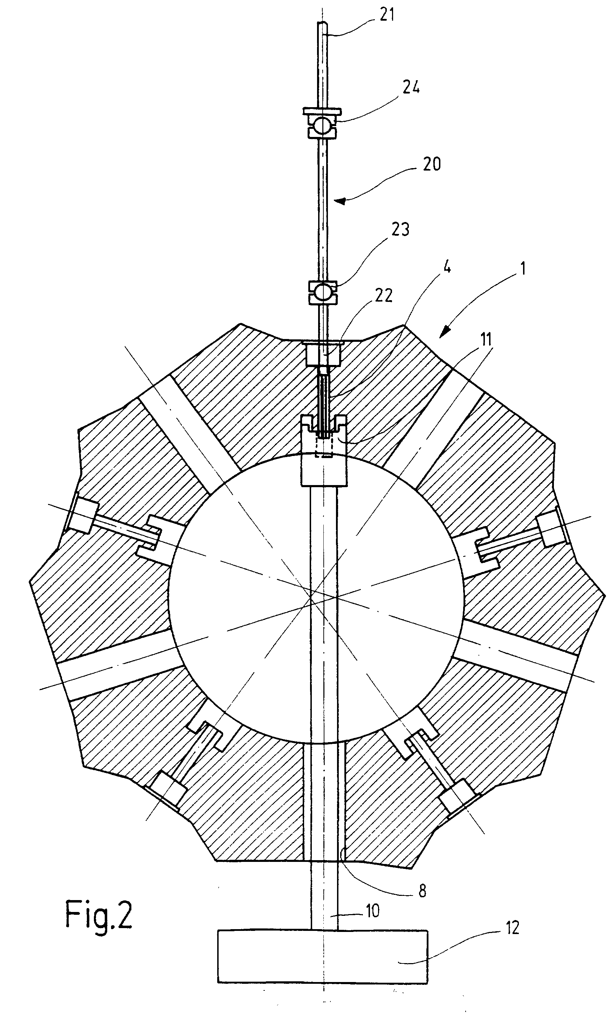

Es bestand daher die Aufgabe, eine vereinfachte Vorrichtung zur Aufspannung solcher Werkzeugstücke zu schaffen. Diese Aufgabe wird durch die Merkmale des Anspruchs 1 gelöst. Ein Ausführungsbeispiel der Lösung dieser Aufgabe ist in Fig. 2 dargestellt.

Die überraschend einfache Lösung besteht nun darin, einen Einsteckdorn 10 durch die Herstellungsbohrungen 8 hindurchzuführen. Der Einsteckdorn 4 ist mit einem Kopf 11 versehen ist, der in den zylindrischen Bereich 6, der das innere Ende der Bohrung 4 umgibt, hineinpasst und in diesem eingeführt wird. Auf diese Art ergibt sich eine exakte Zentrierung der Bohrung 4 bezüglich des Steckdornes 10 bzw. eines Basisteils 12, der der Handhabung in einer Aufspannvorrichtung dient.

Mit 20 ist das Honwerkzeug bezeichnet, das an seinem oberen Ende 21 von einer Spindel aufgenommen und gedreht wird. Um, wie üblich, eine zwangfreie Ausrichtung der Achse des unteren Teils 22 des Honwerkzeugs zu gewährleisten, die zur exakten Ausrichtung des Honwerkzeugs in der Bohrung 4 erforderlich ist, sind - in an sich bekannter Weise - im Honwerkzeug 20 zwei Kardangelenke 23, 24 vorgesehen. Es handelt sich bei Bohrungen 4 mit kleinem Durchmesser z.B. um ein Einleistenhonwerkzeug.

Dieser einfache Steckdorn 10 kann für alle Bohrungen 4/8 Verwendung finden. Man braucht nur einen geeigneten Greifer (z. B. einen Roboter), der das Werkstück 2 nach erfolgter Bearbeitung einer Bohrung 4 erfasst und auf die jenige der Herstellungsbohrungen 8 umsetzt, die der nächsten Bohrung 4 zugeordnet ist. Das ist einfach möglich. Komplizierte Positionier- und Justiereinrichtungen einschließlich etwaiger kardanischer Aufhängungen der Werkstückaufnahmeeinrichtungen sind damit überflüssig. Die Bearbeitung derartiger Bohrungen 4 wird von der Handhabung her erheblich vereinfacht und automatisierbar.

### Bezugszeichenliste

- 1: Werkstück
- 3: Bohrung
- 4: Bohrung
- 4': Achse von 4
- 6: Bereich
- 6': Bereich um 7 (Ringnut)
- 7: Bereich, umgebend das Ende von 4
- 8: Herstellungsbohrung
- 10: Steckdorn
- 11: Kopf von 10
- 12: Basisteil
- 20: Honwerkzeug
- 21: oberes Teil von 20
- 22: unteres Teil von 20
- 23, 24: Kardangelenke

## Patentansprüche

1. Verwendung eines Steckdorns (10) zum Aufspannen eines Werkstücks (1), das eine zentrale mittlere Bohrung (3) aufweist, deren Umgebung mehrere zu bearbeitende Bohrungen (4) enthalten, deren Achsen sich nicht in einem Punkt schneiden, wobei sich an die genannten zu bearbeitenden Bohrungen (4) Bereiche (6) mit vergrößertem Radius anschließen, denen Herstellungsbohrungen (8) zugeordnet sind, wobei die Achsen (4) der zu bearbeitende Bohrungen (4) mit denen der Herstellungsbohrungen (8) fluchten, aber nicht die Achse der mittleren Bohrung (3) schneiden, und wobei sich der Steckdorn (10) durch eine der Herstellungsbohrungen (8) in einen Bereich (6) mit vergrößertem Radius erstreckt.

## Claims

1. The use of an insertion mandrel for holding a workpiece, which is provided with a central middle bore (3), the portion of the workpiece surrounding said bore being provided with a plurality of bores (4) to be machined, the axes of which do not intersect each other at one point, and wherein adjacent to the bores (4) to be machined there a provided areas (6) of enlarged diameter, to which bores (4) to be machined production bores(8) are assigned such that the axes of the to be machined bores (4) are in alignment with the production bores (8), but do not intersect the axis of the middle bore (3), and wherein the insertion mandrel extends through one of the production bores(8) into one of the areas (6) of enlarged diameter.

## Revendications

1. Utilisation d'une broche enfichable (10) pour la fixation d'une pièce à usiner (1) qui présente un alésage (3) central et médian, dont le pourtour contient plusieurs orifices (4) d'usinage dont les axes ne se coupent pas en un point, des zones (6) avec un rayon agrandi étant contiguës aux orifices (4) désignés pour l'usinage, zones auxquelles correspondent des orifices de fabrication (8), les axes (4) des orifices (4) d'usinage étant alignés avec ceux des orifices de fabrication (8) mais ne coupant pas l'axe de l'alésage (3) central, et la broche enfichable (10) s'avançant à travers l'un des orifices de fabrication (8) dans une zone (6) avec un rayon agrandi.
